# EUROPÄISCHE PATENTSCHRIFT

(11) **EP 3 201 126 B1**
(45) Veröffentlichungstag und Bekanntmachung des Hinweises auf die Patenterteilung: **18.12.2019**
(21) Anmeldenummer: 15763011.2
(22) Anmeldetag: 15.09.2015
(51) Int. Cl.: C01B 3/22, C01B 3/58, C25B 11/03, C25B 11/04, B01J 19/08, B01J 19/24

(54) **MEMBRAN-ELEKTRODEN-ANORDNUNG, REAKTOR UMFASSEND DIE MEMBRAN-ELEKTRODEN-ANORDNUNG UND VERFAHREN ZUR ABTRENUNG VON WASSERSTOFF**
MEMBRANE ELECTRODE ARRANGEMENT, REACTOR COMPRISING THE MEMBRANE ELECTRODE ARRANGEMENT AND METHOD FOR HYDROGEN SEPARATION
ENSEMBLE D'ÉLECTRODE À MEMBRANE, RÉACTEUR POURVU DE L'ENSEMBLE D'ÉLECTRODE À MEMBRANE ET PROCEDE DE SÉPARATION DE L'HYDROGENE

(30) Priorität: 29.09.2014 EP 14186807
(43) Veröffentlichungstag der Anmeldung: 09.08.2017
(73) Patentinhaber: BASF SE, 67056 Ludwigshafen am Rhein (DE)
(72) Erfinder: MUTORO, Eva, 67059 Ludwigshafen (DE); BECHTLOFF, Gunter, 67259 Heuchelheim (DE); BRÄUNINGER, Sigmar, 69502 Hemsbach (DE); SCHAACK, Bernd Bastian, 64625 Bensheim (DE)
(86) Internationale Anmeldenummer: PCT/EP2015/071043
(87) Internationale Veröffentlichungsnummer: WO 2016/050500

(56) Entgegenhaltungen:
- EP-A1- 2 417 084
- US-A1- 2004 028 965
- US-A1- 2006 054 512
- US-A1- 2008 292 921
- GRIGORIEV S A ET AL: "Pure hydrogen production by PEM electrolysis for hydrogen energy", INTERNATIONAL JOURNAL OF HYDROGEN ENERGY, ELSEVIER SCIENCE PUBLISHERS B.V., BARKING, GB, Bd. 31, Nr. 2, 1. Februar 2006 (2006-02-01), Seiten 171-175, XP024899792, ISSN: 0360-3199, DOI: 10.1016/J.IJHYDENE.2005.04.038 [gefunden am 2006-02-01]
- PHAIR J W ET AL: "Review of proton conductors for hydrogen separation", IONICS ; INTERNATIONAL JOURNAL OF IONICS THE SCIENCE AND TECHNOLOGY OF IONIC MOTION, SPRINGER, BERLIN, DE, Bd. 12, Nr. 2, 15. Juni 2006 (2006-06-15), Seiten 103-115, XP019416437, ISSN: 1862-0760, DOI: 10.1007/S11581-006-0016-4

## Beschreibung

Die vorliegende Erfindung betrifft eine Membran-Elektroden-Anordnung, einen Reaktor, welcher die erfindungsgemäße Membran-Elektroden-Anordnung umfasst, sowie auf ein Verfahren zur Abtrennung von Wasserstoff unter Verwendung der erfindungsgemäßen Membran-Elektroden-Anordnung.

Die Abtrennung von Wasserstoff aus gemischten Reaktionsgasen ist für verschiedene Anwendungen von höchstem Interesse, da jede Gleichgewichtsreaktion, in der Wasserstoff erzeugt wird, auf die Produktseite verschoben werden kann, wenn der Wasserstoff entfernt wird. Aus dem Stand der Technik sind daher verschiedene Methoden bekannt, mit denen Wasserstoff abgetrennt werden kann.

So beschreibt WO 2007/096 297 A1 beispielsweise ein Verfahren, bei dem der entstehende Wasserstoff durch Oxidation an reduzierbaren Metalloxiden aus dem Reaktionsgemisch entfernt wird. Allerdings ergibt sich hierbei der Nachteil, dass die reduzierbaren Metalloxide von Zeit zu Zeit mit Sauerstoff regeneriert werden müssen, um ihre Fähigkeit zur Abtrennung von Wasserstoff zu behalten. In WO 2007/099 028 A1 wird vorgeschlagen, den bei der Reaktion entstandenen Wasserstoff durch die Umsetzung mit einem Oxidationsmittel wie Luft, Sauerstoff, CO, CO₂, NO und/oder N₂O umzusetzen. Hierbei können jedoch, abhängig von den für die ursprüngliche chemische Reaktion eingesetzten Edukten, unerwünschte Nebenprodukte entstehen. Nachteilig an dieser Art der Wasserstoff-Abtrennung ist ferner die fehlende Möglichkeit, den Wasserstoff als wertvollen Rohstoff direkt zurück zu gewinnen.

Eine Alternative wird in WO 2007/025 882 A1 beschrieben, nach welcher die Abtrennung durch eine selektiv für Wasserstoff durchlässige Membran erfolgt. Hier wandert der Wasserstoff als H₂-Molekül durch eine Membran, für die bevorzugt Palladium und Palladium-Legierungen eingesetzt werden. Die Diffusionsgeschwindigkeit hängt dabei vom Unterschied des Wasserstoffpartialdrucks zwischen den beiden Seiten der eingesetzten Membran ab. Um folglich eine bessere Abtrennung zu erreichen, muss ein ausreichend hoher Wasserstoffpartialdruckunterschied zwischen beiden Seiten der Membran erzeugt werden, was häufig nur bei hohen Temperaturen und/oder hohen Drücken möglich ist. Diese Maßnahmen wirken sich jedoch negativ auf die Energiebilanz aus. Außerdem erlaubt die Lage des thermodynamischen Gleichgewichts bestimmter Reaktionen nicht die Erzeugung ausreichend hoher Wasserstoffpartialdruckdifferenzen.

WO 2010/115 786 A1 offenbart ein Verfahren zur Umsetzung von Erdgas zu Aromaten mit elektrochemischer Abtrennung von Wasserstoff und der Erzeugung von elektrischem Strom bzw. Wasserstoff. Darin wird ein Teil des bei der Umsetzung eines Eduktstroms entstandenen Wasserstoffs mit Hilfe einer gattungsgemäßen Membran-Elektroden-Anordnung abgetrennt. Die Membran-Elektroden-Anordnung weist eine selektiv protonenleitende Membran und auf jeder Seite der Membran mindestens einen Elektrodenkatalysator auf. Ein Teil des Wasserstoffs wird dabei an der Anodenseite der Membran zu Protonen oxidiert und die Protonen nach dem Durchdringen der Membran auf der Kathodenseite entweder unter Anlegen einer Spannung zu Wasserstoff reduziert oder unter Erzeugung von elektrischem Strom mit Sauerstoff zu Wasser umgesetzt.

Für großtechnische Anwendungen der Wasserstoff-Abtrennung werden große Membranflächen benötigt. Diese bedeuten, vor allem nach dem letztgenannten Stand der Technik, einen hohen Bedarf an katalytisch aktivem Material für die Elektroden-Katalysatoren, das häufig Edelmetalle aus der Platingruppe wie Platin, Rhodium, Ruthenium oder Palladium beinhaltet. Damit werden große Membranen aufgrund der Menge des benötigten katalytisch aktiven Materials sehr teuer. Es besteht daher ein Bedarf, die Menge des katalytisch aktiven Materials zu verringern.

Angesichts des vorstehend genannten Standes der Technik liegt der vorliegenden Erfindung die Aufgabe zugrunde, eine Membran-Elektroden-Anordnung zu schaffen und ein Verfahren zur Wasserstoff-Abtrennung anzugeben, mit denen eine in der Effektivität verbesserte Abtrennung des Wasserstoffs aus einem Reaktionsgemisch bei gleichzeitiger Einsparung von katalytisch aktivem Material ermöglicht wird.

Diese Aufgabe wird in einem ersten Aspekt der vorliegenden Erfindung durch die in Anspruch 1 definierte Membran-Elektroden-Anordnung (1) gelöst, umfassend
- eine gasdichte, selektiv protonenleitende Membran (3), die eine Retentat-Seite (5) mit einer Anode (7) und eine Permeat-Seite (9) mit einer Kathode (11) aufweist,
- eine Spannungsquelle (13) zur Erzeugung einer Potentialdifferenz zwischen der Anode (7) und der Kathode (11),
- einen Anoden-Katalysator (15), der ein katalytisch aktives Material aufweist, auf der Retentat-Seite (5) und
- einen Kathoden-Katalysator (17), der ein katalytisch aktives Material aufweist, auf der Permeat-Seite (9),
wobei der Kathoden-Katalysator (17) weniger katalytisch aktives Material aufweist als der Anoden-Katalysator (15).

In einem zweiten Aspekt der vorliegenden Erfindung wird die vorstehend genannte Aufgabe durch ein Verfahren zur Abtrennung von Wasserstoff gelöst, umfassend die Schritte
a) Durchführen einer chemischen Reaktion, bei der ein gemischtes Produktgas entsteht, das Wasserstoff enthält, in einem Reaktor nach Anspruch 10,
b) Zuführen des gemischten Produktgases zur Retentat-Seite (5) einer Membran-Elektroden-Anordnung (1), wie sie vorstehend beschrieben wurde,
c) elektrochemisches Abtrennen zumindest eines Teils des in dem gemischten Produktgas enthaltenen Wasserstoffs mittels der Membran-Elektroden-Anordnung (1), wie sie vorstehend beschrieben wurde,
wobei auf der Retentat-Seite (5) der Membran (3) zumindest ein Teil des Wasserstoffs an dem Anoden-Katalysator (15) zu Protonen oxidiert wird und die Protonen nach Durchqueren der Membran (3) auf der Permeat-Seite (9) an dem Kathoden-Katalysator (17) zu Wasserstoff reduziert werden.

In der vorliegenden Erfindung kommt eine elektrochemische Abtrennung des Wasserstoffs aus dem gemischten Produktgas zur Anwendung. Diese ist im Vergleich zur Abtrennung mittels herkömmlicher Membran-Elektroden-Anordnungen und Verfahren zur Abtrennung von Wasserstoff deutlich effektiver. Bei gleich bleibender Membranfläche kann somit deutlich mehr Wasserstoff abgetrennt werden, so dass im gemischten Produktgas weniger Wasserstoff verbleibt. Hierdurch wird gegenüber dem vorstehend genannten Stand der Technik eine deutlich stärkere Verschiebung des thermodynamischen Gleichgewichts auf die Produktseite gewährleistet und die Wirtschaftlichkeit der chemischen Reaktion deutlich verbessert. Zudem verringert die vorliegende Erfindung den apparativen Aufwand für die Wasserstoff-Abtrennung. Darüber hinaus kommt die erfindungsgemäße Membran-Elektroden-Anordnung (1) mit gegenüber den im Stand der Technik beschriebenen Membran-Elektroden-Anordnungen mit deutlich geringeren Mengen an katalytisch aktivem Material aus.

Die Erfindung wird nachstehend im Detail beschrieben.

Wenn in der nachfolgenden Beschreibung der erfindungsgemäßen Membran-Elektroden-Anordnung (1) Verfahrensmerkmale genannt werden, so beziehen sich diese insbesondere auf das erfindungsgemäße Verfahren, das nachstehend näher erläutert wird. Wenn andererseits bei der Beschreibung des erfindungsgemäßen Verfahrens gegenständliche Merkmale der Membran-Elektroden-Anordnung (1) angegeben werden, so beziehen sich diese insbesondere auf die Membran-Elektroden-Anordnung (1), die nachstehend näher erläutert wird.

Die vorliegende Erfindung betrifft in einem ersten Aspekt der vorliegenden Erfindung die in Anspruch 1 definierte Membran-Elektroden-Anordnung (1), die
- eine gasdichte, selektiv protonenleitende Membran (3), die eine Retentat-Seite (5) mit einer Anode (7) und eine Permeat-Seite (9) mit einer Kathode (11) aufweist,
- eine Spannungsquelle (13) zur Erzeugung einer Potentialdifferenz zwischen der Anode (7) und der Kathode (11),
- einen Anoden-Katalysator (15), der ein katalytisch aktives Material aufweist, auf der Retentat-Seite (5), und
- einen Kathoden-Katalysator (17), der ein katalytisch aktives Material aufweist, auf der Permeat-Seite (9) umfasst. Dabei weist der Kathoden-Katalysator (17) weniger katalytisch aktives Material auf als der Anoden-Katalysator (15).

Die erfindungsgemäße Membran-Elektroden-Anordnung (1) ist insbesondere für die Abtrennung von Wasserstoff vorgesehen. Sie umfasst im Wesentlichen die gasdichte, selektiv protonenleitende Membran (3), welche zwischen den beiden Elektroden (7, 11) angeordnet ist. Durch Erzeugen einer elektrischen Potentialdifferenz zwischen den beiden Seiten der Membran-Elektroden-Anordnung (1) kann Wasserstoff gemäß nachstehender Gleichung auf der Retentat-Seite (5) selektiv zu Protonen oxidiert werden:

H₂ → 2 H⁺ + 2 e⁻

Die Protonen können dann aufgrund der Potentialdifferenz durch die Membran (3) transportiert und auf der Permeat-Seite (9) gemäß nachstehender Gleichung zu Wasserstoff reduziert werden:

2 H⁺ + 2 e⁻ → H₂

Die erfindungsgemäße Membran-Elektroden-Anordnung (1), insbesondere für die elektrochemische Abtrennung von Wasserstoff, bietet eine Reihe von Vorteilen. Zum einen wird der Wasserstoff als wertvolles Nebenprodukt erhalten, zum Beispiel im Gegensatz zu einer selektiven Oxidation des Wasserstoffs wie im Stand der Technik. Zudem wird Wasserstoff mit sehr hoher Reinheit (typischerweise > 99,9 %) aufgrund der Tatsache erhalten, dass die erfindungsgemäße Membran (3) ein selektiver Protonenleiter ist. Ferner ist die Antriebskraft für den Durchgang des Wasserstoffs durch die Membran (3) nicht wie im Stand der Technik eine Partialdruckdifferenz auf beiden Seiten, sondern eine elektrische Potentialdifferenz zwischen den Elektroden (7, 11). Folglich kann der Wasserstoff auch von einem Bereich mit niedrigerem Partialdruck zu einem Bereich mit höherem Partialdruck gepumpt werden, wodurch selbst kleine Mengen Wasserstoff entfernt werden können oder direkt verdichteter Wasserstoff erzeugt werden kann. Die Drücke des gemischten Produktgases und des Wasserstoffs können sehr flexibel gehandhabt werden und sind nur durch die mechanische Stabilität der Membran-Elektroden-Anordnung (1) begrenzt.

Ein weiterer Vorteil ist die Tatsache, dass die erfindungsgemäße Membran (3) durch den Wasserstoff nicht versprödet, wie dies beispielsweise bei Palladium enthaltenen Membranen der Fall ist. Schließlich ist die elektrochemische Wasserstoffabtrennung in einem sehr breiten Temperaturbereich anwendbar, für die erfindungsgemäße Polymermembran (3) von 10 °C bis etwa 200 °C. Keramische Protonenleiter erlauben einen Temperaturbereich bis 1.000 °C.

Die Dicke der erfindungsgemäßen Membran-Elektroden-Anordnung 1 beträgt 250 µm bis 2.100 µm, bevorzugt 600 µm bis 1.500 µm.

Die erfindungsgemäße Membran-Elektroden-Anordnung (1) erfüllt die Anforderungen einer sehr guten Elektromembran, insbesondere in Bezug auf eine hohe Wasserstoff-Abtrennrate von mehr als 95 % ohne eine signifikante Beeinträchtigung der Leistungsfähigkeit mit der Zeit zu zeigen. Ferner ist die erfindungsgemäße Membran ausreichend leitfähig für Protonen, zeigt eine vernachlässigbare elektronische Leitfähigkeit, ist gasdicht, mechanisch stabil und ferner stabil gegen das gemischte Produktgas.

Unter einer "gasdichten" Membran wird eine Membran verstanden, welche praktisch keine Porosität aufweist, durch welche Gase in atomarer oder molekularer Form von einer Seite der Membran auf die andere Seite der Membran gelangen könnten. "Gasdicht" bedeutet ferner, dass keine Gase unselektiv beispielsweise durch Adsorption, Lösung in der Membran, Diffusion und Desorption durch die Membran transportiert werden. Die Eigenschaft "selektiv protonenleitend" bedeutet zudem, dass die Membran insbesondere nicht elektronenleitend ist.

Die Membran (3) ist vorzugsweise als Platte oder Rohr ausgebildet, wobei die üblichen, aus dem Stand der Technik zur Auftrennung von Gasgemischen bekannten Membrananordnungen verwendet werden können. Erfindungsgemäß kann für die Membran (3) jedes dem Fachmann bekannte Material eingesetzt werden, aus dem sich eine gasdichte und selektiv protonenleitende Membran (3) im Sinne der vorliegenden Erfindung bilden lässt. Hierzu gehören beispielsweise die von J. W. Phair und S. P. S. Badwal in lonics (2006) 12, Seiten 103 - 115, aufgeführten Materialien (insbesondere Polybenzimidazole). Auch selektiv protonenleitende Membranen, wie sie aus der Brennstoffzellentechnik bekannt sind, können erfindungsgemäß verwendet werden.

Insbesondere eignen sich für die die Herstellung einer gasdichten und selektiv protonenleitenden Membran (3) im Sinne der vorliegenden Erfindung Polymermembranen, wofür als geeignete Polymere sulfonierte Polyetheretherketone (S-PEEK), sulfonierte Polybenzoimidazole (S-PBI) und sulfonierte Fluorkohlenwasserstoffpolymere (NAFION®) ebenso wie perfluorierte Polysulfonsäuren, Polymere auf Styrolbasis, Poly(arylenether), Polyimide und Polyphosphazene eingesetzt werden können. Insbesondere können auch Polybenzimidazol-Membranen eingesetzt werden, die auf Polybenzimidazol basieren, das mit Phosphorsäure dotiert oder getränkt ist.

Mit dem Begriff "Retentat-Seite" wird die Seite der Membran-Elektroden-Anordnung (1) bezeichnet, an welcher der Wasserstoff enthaltende Produktstrom vorbeigeleitet wird. Demgegenüber wird mit "Permeat-Seite" die Seite der Membran-Elektroden-Anordnung (1) bezeichnet, an welcher der gasförmige Wasserstoff abgeführt wird.

Mit "Anodenkatalysator (15)" wird im Sinne der vorliegenden Erfindung der Elektrodenkatalysator auf der Retentat-Seite (5) bezeichnet, während der "Katodenkatalysator (17)" der Elektrodenkatalysator auf der Permeat-Seite (9) ist.

Als "katalytisch aktives Material" können die üblichen, dem Fachmann bekannten Verbindungen und Elemente verwendet werden, welche die Dissoziation von molekularem Wasserstoff in atomaren Wasserstoff, die Oxidation von Wasserstoff zu Protonen sowie die Reduktion von Protonen zu Wasserstoff katalysieren können. Geeignet sind beispielsweise Pd, Pt, Cu, Ni, Ru, Fe, Co, Cr, Mn, V, W, Wolframcarbid, Mo, Molybdäncarbid, Zr, Rh, Ru, Ag, Ir, Au, Re, Y, Nb sowie Legierungen und Mischungen davon, bevorzugt ist erfindungsgemäß Pt. Die katalytisch aktiven Materialien können auch geträgert vorliegen, bevorzugt wird dabei Kohlenstoff als Träger eingesetzt.

In einer Weiterbildung der Membran-Elektroden-Anordnung (1) beträgt die Menge des katalytisch aktiven Materials des Kathoden-Katalysators (17) 0,001 mg/cm² bis 1,00 mg/cm², bevorzugt 0,05 mg/cm² bis 0,70 mg/cm², bezogen auf die Gesamtfläche der Kathode (11).

Unterhalb einer Menge von 0,001 mg/cm² ist eine ausreichende katalytische Aktivität nicht mehr sichergestellt, während eine Menge von mehr als 1,00 mg/cm² zu keiner weiteren Verbesserung der katalytischen Aktivität mehr führt. Hohe Flächenbeladungen von mehr als 1,00 mg/cm², insbesondere bei Katalysatoren mit niedrigen spezifischen Beladungen (Katalysator auf Träger), führen zu dicken Katalysatorschichten, die sich wiederum nachteilig auf die Gesamtleistung auswirken. Dünne Katalysatorschichten haben im allgemeinen Vorteile in Bezug auf die Stofftransporteigenschaften.

Es hat sich herausgestellt, dass eine symmetrische Verteilung des katalytisch aktiven Materials auf Anoden-Katalysator (15) und Kathoden-Katalysator (17) bei gleichzeitiger Verringerung der Menge nicht zur gewünschten und benötigten Wasserstoff-Abtrennrate führt. In überraschender Weise wurde jedoch gefunden, dass in einer Ausführungsform der Erfindung eine asymmetrische Verteilung des katalytisch aktiven Materials zu vorteilhaften Effekten führt, wenn die Menge des katalytisch aktiven Materials des Kathoden-Katalysators (17) im Verhältnis von 1 : 100 bis 1 : 1,25, insbesondere im Verhältnis von 1 : 1,5-5,0, bevorzugt 1 : 1,75-3,0, zur Menge des katalytisch aktiven Materials des Anoden-Katalysators (15) steht. Die Gesamtmenge des eingesetzten Katalysators wird somit reduziert, wobei gleichzeitig auf der Anodenseite durch die genannte höhere Beladung eine weitgehende Toleranz gegenüber Verunreinigungen der Retentat-Seite (5) erreicht wird. Dadurch können lange Standzeiten erreicht werden. Insbesondere kann trotz deutlicher Verringerung der Menge des katalytisch aktiven Materials des Kathoden-Katalysators (17) eine weiterhin hohe Wasserstoff-Abtrennrate von mehr als 95 % realisiert werden.

Bei der asymmetrischen Verteilung des katalytisch aktiven Materials auf Anoden-Katalysator (15) und Kathoden-Katalysator (17) wird die größere Menge an katalytisch aktivem Material auf der Retentat-Seite (5) (Anodenseite) vorgesehen. Aus dem Stand der Technik ist bekannt, dass aufgrund von in einem Produktgas enthaltenen Verunreinigungen eine Mindestmenge an katalytisch aktivem Material an den Elektroden-Katalysatoren vorhanden sein muss. Überraschenderweise wurde in der vorliegenden Erfindung herausgefunden, dass eine geringere Menge an katalytisch aktivem Material des auf der Permeat-Seite (9) (Kathodenseite) hingegen ausreicht, ohne die Wasserstoff-Abtrennrate zu beeinträchtigen. Die vorliegende Erfindung unterscheidet sich damit grundlegend von mit Wasserstoff betriebenen Brennstoffzellen, für die asymmetrische Katalysatorbeladungen mit höheren Beladungen auf der Kathodenseite Stand der Technik sind.

Es ist aus Gründen der effektiven Wasserstoffabtrennung insbesondere bevorzugt, wenn der Anoden-Katalysator (15) und/oder der Kathoden-Katalysator (17) Platin als katalytisch aktives Material aufweist. Aus der Literatur sind demgegenüber Legierungskatalysatoren und Nichtedelmetallkatalysatoren für die Wasserstoffoxidation (Anode) und die Wasserstoffentwicklung (Kathode) bekannt, die gegenüber Platin aber Nachteile im Hinblick auf die Dauerstabilität aufweisen. Grundsätzlich ist das beschriebene Prinzip auch auf andere Katalysatoren anwendbar.

In einer weiteren Ausführungsform der Erfindung weisen die Retentat-Seite (5) und/oder die Permeat-Seite (9) je eine aktive Fläche der Membran-Elektroden-Anordnung (1) auf, die das katalytisch aktive Material umfasst. Die aktive Fläche der Membran-Elektroden-Anordnung (1) beträgt 5 cm² bis 20.000 cm², bevorzugt 25 cm² bis 10.000 cm². Für die beabsichtigte großtechnische Anwendung der erfindungsgemäßen Membran-Elektroden-Anordnung (1) sind kleinere aktive Flächen als 5 cm², bevorzugt 25 cm², wirtschaftlich nicht sinnvoll. Eine Fläche von mehr als 10.000 cm², bevorzugt 6.000 cm², ist in der technischen Realisierung nicht mehr sinnvoll, da die Fehlerquote mit zunehmender Größe steigt.

Mit "aktive Fläche" wird im Sinne der vorliegenden Erfindung die Fläche der Membran-Elektroden-Anordnung (1) bezeichnet, die für die Oxidation/Reduktion des Wasserstoffs tatsächlich zur Verfügung steht. Praktisch bedeutet das, dass nicht die gesamte geometrische Fläche der Elektrodenkatalysatoren (15, 17) zur Verfügung steht, da diese Flächen zumindest im Randbereich durch einen Rahmen mit Halterung und entsprechendem Dichtmaterial abgedeckt und dadurch verringert werden.

Die Erfindung sieht vor, dass
- die Anode (7) eine Gasdiffusionselektrode ist, die eine an die Membran (3) angrenzende Gasdiffusionsschicht (19) und eine darauf aufgebrachte mikroporöse Schicht (21) aufweist, auf die der Anoden-Katalysator (15) aufgebracht ist
   und/oder
- die Kathode (11) eine Gasdiffusionselektrode ist, die eine an die Membran (3) angrenzende Gasdiffusionsschicht (23) und eine darauf aufgebrachte mikroporöse Schicht (25) aufweist, auf die der Kathoden-Katalysator (17) aufgebracht ist.

Da die erfindungsgemäße Membran (3) selbst gasdicht ausgeführt ist, wie vorstehend bereits beschrieben wurde, ist es für einen guten Kontakt der Membran (3) mit dem auf der Retentat-Seite (5) befindlichen Wasserstoff und einen guten Abtransport des abgetrennten Wasserstoffs auf der Permeat-Seite (9) von Vorteil, wenn die Gasdiffusionselektroden (7, 11) gasdurchlässig sind. Hierzu werden Gasdiffusionsschichten (19, 23) und mikroporösen Schichten (21, 25) vorgesehen. Dabei können formal das Material der mikroporösen Schichten (21, 25) als Elektrodenmaterial und die Gasdiffusionsschichten (19, 23) als Träger aufgefasst werden. Da aber die Materialien der mikroporösen Schichten (21, 25) und der Gasdiffusionsschichten (19, 23) elektrisch leitfähig sind, bilden diese praktisch gemeinsam die Elektroden (7, 11).

Als "Gasdiffusionselektrode" wird im Sinne der vorliegenden Erfindung die Gesamtheit von Gasdiffusionsschichten (19, 23), mikroporösen Schichten (21, 25) und Elektroden-Katalysatoren (15, 17) bezeichnet.

Eine "Gasdiffusionsschicht" ist im Sinne der vorliegenden Erfindung eine poröse Schicht, welche die Diffusion des Wasserstoffs in gasförmigem Zustand zur Membran (3) ermöglicht. Erfindungsgemäß hat die Gasdiffusionsschicht (19, 23) eine Porengröße von 0,5 µm bis 50 µm und eine Dicke zwischen 100 µm und 500 µm.

Ferner ist eine "mikroporöse Schicht" im Sinne der vorliegenden Erfindung eine Schicht mit einer Porengröße von 250 nm bis 15 µm und einer Dicke zwischen 5 µm und 150 µm.

Es ist bevorzugt, wenn die Gasdiffusionsschichten (19, 23) aus einem elektronisch leitfähigen und offenporigen Material aufgebaut sind, insbesondere aus Vlies, Gewebe, Papier, Filz, Schaum, Gelege oder Gewirke. Insbesondere können die Gasdiffusionsschichten (19, 23) Platten mit einer gitterartigen Oberflächenstruktur aus einem System feiner Kanäle oder Schichten sein. Hierdurch wird der abzutrennende Wasserstoff auf der Retentat-Seite (5) nahe an die Membran (3) geführt und auf der Permeat-Seite (9) der Abtransport des gebildeten Wasserstoffs erleichtert. Insbesondere weisen die Gasdiffusionsschichten (19, 23) und/oder die mikroporösen Schichten (21, 25) eine gute elektronische Leitfähigkeit und Stabilität des Kohlenstoffs auf (d.h. sowohl chemische Stabilität als auch Stabilität unter angelegtem elektrischen Potential).

In einem zweiten Aspekt bezieht sich die vorliegende Erfindung auf einen Reaktor nach Anspruch 8, der zumindest eine Vorrichtung zur Durchführung einer chemischen Reaktion, bei der ein gemischtes Produktgases entsteht, das Wasserstoff enthält, und zumindest eine Membran-Elektroden-Anordnung (1), wie sie vorstehend beschrieben wurde, umfasst. Dabei ist die Membran-Elektroden-Anordnung (1) so mit der Vorrichtung verbunden, dass zumindest ein Teil des gemischten Produktgases aus der Vorrichtung auf die Retentat-Seite (5) der Membran-Elektroden-Anordnung (1) leitbar ist.

In einer besonderen Ausführungsform ist der Reaktor eine Anlage zur Dehydroaromatisierung von Kohlenwasserstoffen. Weiter kann die Membran-Elektroden-Anordnung (1) unmittelbar am oder im Reaktor angeordnet sein, wenn die Membran einen keramischen Protonenleiter umfasst. Hiermit kann das Gleichgewicht in situ verschoben werden und der Gasstrom muss nicht erst abgekühlt werden.

Ein dritter Aspekt der vorliegenden Erfindung betrifft ein Verfahren nach Anspruch 9 zur Abtrennung von Wasserstoff, das die Schritte
a) Durchführen einer chemischen Reaktion, bei der ein gemischtes Produktgas entsteht, das Wasserstoff enthält, in einem Reaktor nach Anspruch 10,
b) Zuführen des gemischten Produktgases zur Retentat-Seite (5) einer Membran-Elektroden-Anordnung (1), wie sie vorstehend beschrieben wurde,
c) elektrochemisches Abtrennen zumindest eines Teils des in dem gemischten Produktgas enthaltenen Wasserstoffs mittels der Membran-Elektroden-Anordnung (1), wie sie vorstehend beschrieben wurde, umfasst.

Auf der Retentat-Seite (5) der Membran (3) wird dabei zumindest ein Teil des Wasserstoffs an dem Anoden-Katalysator (15) zu Protonen oxidiert und die Protonen werden nach Durchqueren der Membran (3) auf der Permeat-Seite (9) an dem Kathoden-Katalysator (17) zu Wasserstoff reduziert.

Gegenüber einigen der vorstehend genannten Verfahren aus dem Stand der Technik weist das erfindungsgemäße Verfahren den Vorteil auf, dass aufwändige und kostenintensive Unterbrechungen der chemischen Reaktion bzw. der Synthese überflüssig werden und dass die Synthese über einen längeren Zeitraum kontinuierlich betrieben werden kann. Das erfindungsgemäße Verfahren kommt zudem im Vergleich zu bekannten Verfahren, bei denen gasförmige Oxidationsmittel wie Luft, Sauerstoff, CO, CO₂, NO oder N₂O eingesetzt werden, ohne eine apparativ aufwändige und kostenintensive Abtrennung der durch die Zugabe der Oxidationsmittel entstandenen Nebenprodukte aus. Beim Einsatz von Sauerstoff bzw. Luft als Oxidationsmittel entsteht beispielsweise Wasser, dessen Anwesenheit sich negativ auf bestimmte Reaktionen auswirken kann.

Das erfindungsgemäße Verfahren hat einen besonderen Vorteil gegenüber den bekannten Verfahren, bei denen Wasserstoff als H₂-Molekül mittels einer für Wasserstoff selektiven Membran abgetrennt wird. Dieser besondere Vorteil liegt in der elektrochemischen Abtrennung des gebildeten Wasserstoffs aus dem gemischten Produktgas. Die Triebkraft der erfindungsgemäßen elektrochemischen Wasserstoffabtrennung ist der Potentialunterschied zwischen den beiden Seiten der Membran (3). Da die Abtrennung nicht, wie bei den üblich verwendeten für Wasserstoff selektiven Membranen, vom Unterschied des Wasserstoff-Partialdrucks zwischen den beiden Seiten der Membran (3) abhängig ist, kann die Wasserstoffabtrennung bei sehr viel niedrigeren Partialdrücken und Partialdruckunterschieden durchgeführt werden, wobei vorzugsweise auf einen von außen aufgeprägten Druckunterschied völlig verzichtet werden kann. Insbesondere herrscht auf der Retentat-Seite (5) und der Permeat-Seite (9) ungefähr der gleiche Druck. Damit verringert sich die mechanische Beanspruchung der Membran (3) deutlich, was unter anderem ihre Langzeitstabilität erhöht sowie die Auswahl an für die Membran (3) infrage kommenden Materialien vergrößert. Werden druckstabile Membranen eingesetzt, so ist es darüber hinaus möglich, komprimierten Wasserstoff zu erzeugen.

Die elektrochemische Abtrennung des Wasserstoffs ist im Vergleich zur Abtrennung mittels herkömmlicher wasserstoffselektiver Membranen deutlich effektiver. Bei gleicher Trennleistung kann daher die erforderliche Membranfläche verkleinert werden oder bei gleich bleibender Membranfläche deutlich mehr Wasserstoff abgetrennt werden. Insgesamt ist daher das erfindungsgemäße Verfahren mit einem geringeren apparativen Aufwand verbunden.

Durch die effektivere Wasserstoffabtrennung ist der Anteil des im Reaktionsgemisch verbleibenden Wasserstoffs im Vergleich zu herkömmlichen Verfahren deutlich geringer. Hierdurch wird gegenüber im Stand der Technik beschriebenen Verfahren eine deutlich stärkere Verschiebung des thermodynamischen Gleichgewichts auf die Seite der gewünschten Produkte gewährleistet und die Wirtschaftlichkeit des chemischen Verfahrens deutlich verbessert. Darüber hinaus ist es mit dem beschriebenen Verfahren auch möglich, ohne weitere analytische Methoden definierte Abreicherungsgrade zu erzielen, indem die elektrische Strommenge bestimmt wird.

Das erfindungsgemäße Verfahren hat ferner gegenüber dem vorstehend letztgenannten Stand der Technik den Vorteil, dass eine wesentlich geringere Menge an katalytisch aktivem Material ausreicht, um die gleiche Wasserstoff-Abtrennrate zu realisieren.

Mit dem Begriff "gemischtes Produktgas" wird im Sinne der vorliegenden Erfindung ein Gemisch bezeichnet, das beim Durchführen der chemischen Reaktion in Schritt a) entsteht und üblicherweise die gewünschten Reaktionsprodukte und Wasserstoff enthält. Daneben kann das gemischte Produktgas nicht umgesetzte Edukte sowie Spuren anderer Gase enthalten.

In dem in Schritt c) durchgeführten elektrochemischen Abtrennen mittels der vorstehend beschriebenen Membran-Elektroden-Anordnung (1) wird der abzutrennende Wasserstoff in Form von Protonen durch die Membran (3) transportiert. Für diesen Transport der Protonen durch die Membran (3) wird elektrische Energie, die vorzugsweise durch Anlegen einer Gleichspannung an die Elektroden (7, 11) der Membran-Elektroden-Anordnung (1) zugeführt wird, eingesetzt.

In einer Weiterbildung des erfindungsgemäßen Verfahrens ist die chemische Reaktion in Schritt a) eine Dehydroaromatisierung von C₁- bis C₄-Alkanen. Da bei dieser Reaktion sehr viel Wasserstoff als Nebenprodukt anfällt, ist die vorliegende Erfindung hier besonders wirkungsvoll. Der abgetrennte Wasserstoff ist weitgehend frei von Verunreinigungen. Da der anfallende Wasserstoff im Gasgemisch einen niedrigen Partialdruck besitzt, ist der Einsatz von Membranen, mit denen H₂ als Molekül selektiv abgetrennt wird, nicht sinnvoll.

In einer Ausführungsform werden aus dem gemischten Produktgas mindestens 30 %, bevorzugt mindestens 50 %, besonders bevorzugt mindestens 70 %, ganz besonders bevorzugt mindestens 95 % und insbesondere bevorzugt mindestens 98 % des im gemischten Produktgas enthaltenen Wasserstoffs abgetrennt. Je mehr Wasserstoff aus dem gemischten Produktgas abgetrennt wird, umso stärker wird das Gleichgewicht der chemischen Reaktion auf die Produktseite verschoben, wodurch die Produktausbeute steigt. Wird das Gas der Retentat-Seite (5) zurück in den Reaktor geführt, verringert sich dieser Gasstrom durch eine effizientere Wasserstoffabtrennung.

Vorzugsweise wird die Abtrennung des Wasserstoffs bei Temperaturen von 20°C bis 200°C, bevorzugt bei 50°C bis 180°C, und insbesondere bevorzugt von 60°C bis 165°C durchgeführt. Damit ist die erfindungsgemäße Verfahrensführung auf die erfindungsgemäße Membran-Elektroden-Anordnung (1) ausgelegt. Zudem können durch deutlich niedrigere Temperaturen Effekte der Energieeinsparung erreicht werden. In einer besonderen Weiterbildung wird die Dehydroaromatisierung von C₁-bis C₄-Alkanen und damit die Abtrennung des Wasserstoffs bei Temperaturen von 140 °C bis 165 °C durchgeführt.

Es hat sich für die Abtrennung des Wasserstoffs als vorteilhaft erwiesen, wenn die Abtrennung des Wasserstoffs bei Spannungen von 0,05 mV bis 2000 mV, bevorzugt von 50 mV bis 1.000 mV, besonders bevorzugt von 100 mV bis 600 mV, durchgeführt wird. Bei der bevorzugten Dehydroaromatisierung von C₁- bis C₄-Alkanen beträgt die Spannung insbesondere 100 mV bis 400 mV.

Die Abtrennung des Wasserstoffs nach dem erfindungsgemäßen Verfahren wird vorzugsweise bei Drücken von 0,5 bar bis 40 bar, bevorzugt von 1 bar bis 6 bar, besonders bevorzugt von 1 bar bis 4 bar, insbesondere bei 3 bar bis 4 bar vorgenommen. Gemäß einer bevorzugten Ausführungsform der Erfindung liegt der Druckunterschied zwischen der Retentat-Seite (5) und der Permeat-Seite (9) der Membran (3) unter 1 bar, bevorzugt unter 0,5 bar, besonders bevorzugt besteht nahezu kein Druckunterschied.

Der auf der Permeat-Seite (9) erhaltene Wasserstoff enthält höchstens 5 Mol-%, bevorzugt höchstens 2 Mol-% und besonders bevorzugt höchstens 1 Mol-% gasförmige Verunreinigungen. Darüber hinaus kann der Wasserstoff je nach verwendeter selektiv protonenleitender Membran bis zu 30 Mol-%, bevorzugt bis zu 15 Mol-%, besonders bevorzugt bis zu 10 Mol-% Wasser enthalten. Die Gegenwart von Wasser ist bei einigen Membrantypen, zum Beispiel bei bestimmten Polymermembranen zur Befeuchtung der Polymermembran erwünscht. Es ist möglich, sowohl von der Permeat-Seite (9) als auch von der Retentat-Seite (5) zu befeuchten.

Der abgetrennte Wasserstoff kann vor der Weiterverwendung getrocknet werden. Dies kann insbesondere dann durchgeführt werden, wenn die Abtrennung durch eine bestimmte Art von Polymermembran erfolgt ist, die befeuchtet werden muss. Ebenso kann der Retentat-Gasstrom getrocknet werden, wenn er der Reaktion wieder zugeführt wird.

Weitere Ziele, Merkmale, Vorteile und Anwendungsmöglichkeiten ergeben sich aus der nachfolgenden Beschreibung von Ausführungsbeispielen der Erfindung anhand der Figuren. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehung. Es zeigen:
- Figur 1: eine schematische Darstellung einer Membran-Elektroden-Anordnung 1 zur Verdeutlichung der Vorgänge bei der Wasserstoff-Abtrennung,
- Figur 2a: eine schematische Schnittdarstellung einer Membran-Elektroden-Anordnung 1 nach einer Ausführungsform der Erfindung,
- Figur 2b: eine schematische Schnittdarstellung einer Membran-Elektroden-Anordnung 1 nach einer anderen Ausführungsform der Erfindung,
- Figur 3: ein Diagramm zur Darstellung der Wasserstoff-Abtrennrate über die Zeit für eine Membran-Elektroden-Anordnung 1 nach der ersten Ausführungsform der Erfindung aus Beispiel 1,
- Figur 4: ein Diagramm zur Darstellung der Wasserstoff-Abtrennrate über die Zeit für eine Membran-Elektroden-Anordnung 1 nach der ersten Ausführungsform der Erfindung aus Beispiel 3 und
- Figur 5: ein Diagramm zur Darstellung der Wasserstoff-Abtrennrate über die Zeit für eine Membran-Elektroden-Anordnung 1 nach der zweiten Ausführungsform der Erfindung aus Beispiel 4.

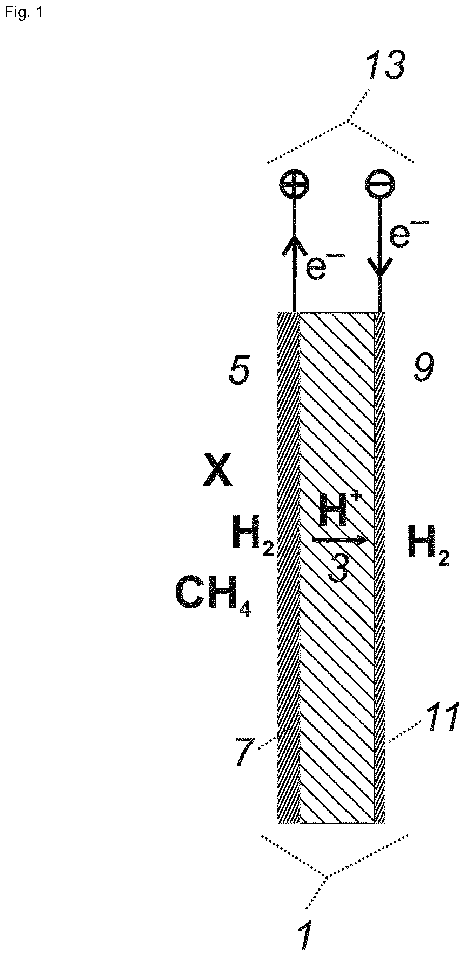

In Figur 1 ist das Grundkonzept einer Elektromembran dargestellt. Auf der Anodenseite (Retentat-Seite 5) der Membran-Elektroden-Anordnung 1 wird ein gemischtes Gas zugeführt, das im vorliegenden Beispiel Methan (CH₄) Wasserstoff (H₂) und Verunreinigungen (X) enthält. An der Anode 7 wird der im gemischten Produktgas enthaltene Wasserstoff H₂ zu Protonen H⁺ oxidiert und durchdringt durch Anlegen einer Potentialdifferenz zwischen der Anode 7 und der Kathode 11 mittels der Spannungsquelle 13 die protonenleitfähige Membran 3. An der Kathodenseite (Permeat-Seite 9) werden die Protonen unter Zufügung von Elektronen wieder zu Wasserstoff in gasförmigem Zustand reduziert.

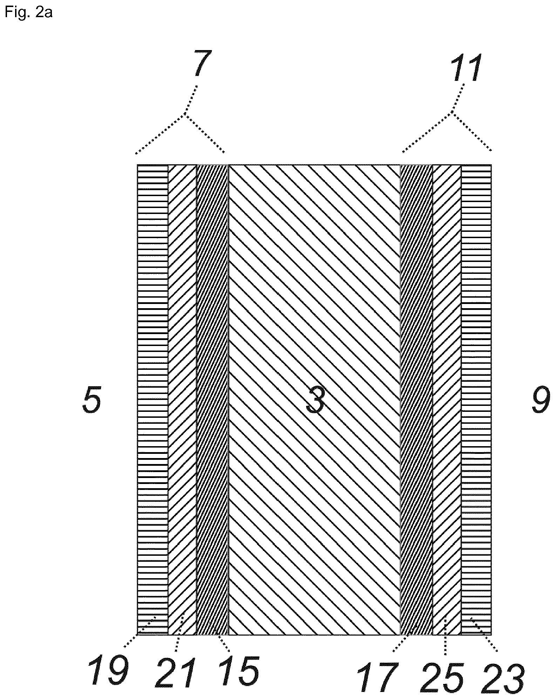

Figur 2a zeigt schematisch den Aufbau einer erfindungsgemäßen Membran-Elektroden-Anordnung 1 in einer bevorzugten Ausführungsform. Den Kern bildet die Membran 3, die in dieser Ausführungsform aus mit Phosphorsäure dotiertem Polybenzimidazol besteht. Die Membran 3 ist rein protonenleitfähig und gasdicht. Auf beiden Seiten der Membran 3 ist eine Gasdiffusionselektrode 7, 11 angeordnet. In der vorliegenden Ausführungsform sind die Gasdiffusionselektroden 7, 11 symmetrisch aufgebaut.

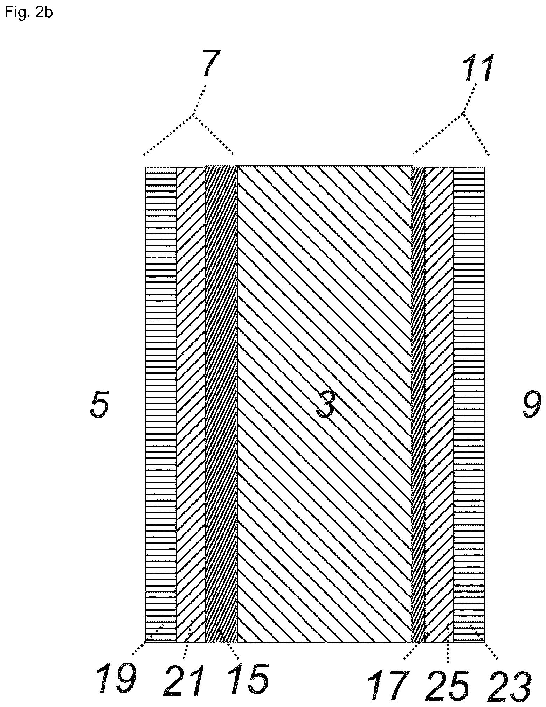

Figur 2b zeigt schematisch den Aufbau einer erfindungsgemäßen Membran-Elektroden-Anordnung 1 in einer anderen bevorzugten Ausführungsform mit einem asymmetrischen Aufbau.

Zur Bildung der Gasdiffusionselektrode wird zunächst ein elektronisch leitfähiges und gasdurchlässiges Kohlefasergewebe als Gasdiffusionsschicht 19, 23 verwendet. Dieses wird mit einer mikroporösen Schicht 21, 25 beschichtet, die in der vorliegenden Erfindung aus Kohlenstoff (z.B. Industrieruß) besteht. Der Katalysator 15, 17 (ggf. ein geträgerter Katalysator, z.B. Katalysator auf einem Kohlenstoffträger) wird auf die mikroporöse Schicht aufgebracht. Hierfür kann bspw. eine Tinte aus dem mit Platin beladenen Kohlenstoffpartikeln (Katalysator), Wasser, Dispergiermitteln (bspw. Nafion® oder EFKA®) und Verdickern (bspw. Xanthan) hergestellt und diese dann aufgedruckt werden. Diese Gasdiffusionselektrode 7, 11 wird mit der Membran 3 in Verbindung gebracht, wobei die katalysatorbeschichtete Seite im direkten Kontakt mit der Membran ist.

Asymmetrische Membranen (Fig. 2b) unterscheiden sich von symmetrischen Membranen (Fig. 2a) dadurch, dass eine geringere Menge an Katalysator auf der Kathode 11 im Vergleich zur Anode 7 aufgebracht wird.

### Beispiele

### Erste Ausführungsform

Ein erstes Anwendungsbeispiel für den Einsatz der erfindungsgemäßen Membran-Elektroden-Anordnung 1 ist eine neue und kosteneffektive Route zur Herstellung von Benzen (sowie Naphthalin) aus Erdgas, bevorzugt über eine Dehydroaromatisierung. Diese endotherme Reaktion gemäß nachstehender Gleichung

6 CH₄ → C₆H₆ + 9 H₂

ist eine durch das thermodynamische Gleichgewicht begrenzte Reaktion mit weniger als 20 % Umsetzung bei 700°C bis 800 °C. Folglich muss für eine Steigerung der Effektivität das nicht reagierte Methan rezykliert und vorher der erzeugte Wasserstoff (immerhin 9 Mol pro 1 Mol Benzen) entfernt werden.

### Aufbau der Membran-Elektroden-Anordnung 1

Die Membran-Elektroden-Anordnung 1 wies eine mit Phosphorsäure dotierte Polybenzimidazol-Membran 3 auf, die unter der Produktbezeichnung "Celtec P®" von der BASF SE vertrieben wird. Auf beiden Seiten der Membran 3 waren Gasdiffusionselektroden 7, 11 aus Kohlenstoff/Platin angeordnet. Die aktive Fläche der Membran 3 betrug in den konkreten Beispielen 25 cm².

Die erfindungsgemäß verwendete Celtec P®-Membran 3 ist eine bei hoher Temperatur (120 °C bis 180 °C) protonenleitfähige Geltyp-Membran mit hoher Toleranz gegen Verunreinigungen wie CO oder Schwefel in dem gemischten Produktgas.

Die Gasdiffusionselektroden 7, 11 bestanden aus einem elektronisch leitfähigen Kohlefasergewebe; die Gasdiffusionsschicht 19, 23 war mit einer mikroporösen Schicht 21, 25 aus Industrieruß (engl.: "carbon black") bedeckt. Als Katalysator 15, 17 wurde auf Kohlenstoff (Vulcan XC72) geträgertes Platin mit einer Beladungen zwischen ca. 10 % und ca. 30 % Pt (bezogen auf die Gesamtmasse des Katalysators bestehend aus Platin und Kohlenstoff) verwendet. Die Menge des Platins auf den Gasdiffusionselektroden 7, 11 ist den nachstehenden Tabellen zu entnehmen.

### Allgemeine Testbedingungen

Beruhend auf der speziellen Anwendung der vorliegenden Membran-Elektroden-Anordnung 1 für die Benzen-Produktion enthielt eine Testgasmischung (d.h. der Anode zugeführtes Gas) 88,1 % CH₄ und 11,4% H₂ sowie Spuren von Verunreinigungen (5000 ppm C₂H₄, 100 ppm C₆H₆ und 50 ppm C₂H₆). Während der Versuche wurde die Kathode 11 jeweils mit N₂ gespült. Die typische Flussrate sowohl für den Anodengasstrom als auch den Kathodengasstrom war 500 ml pro Minute. Als Potentialdifferenz wurden 150 mV angelegt. Die Membran-Elektroden-Anordnungen 1 wurden befeuchtet (2 g/h Wasser auf der Kathodenseite). Die Testtemperatur war 160 °C. Für die spezielle Membran-Elektroden-Anordnung 1 wurde ein Überdruck von 3 bar für die Anodenseite und die Kathodenseite eingestellt.

### Messdaten und Analyse

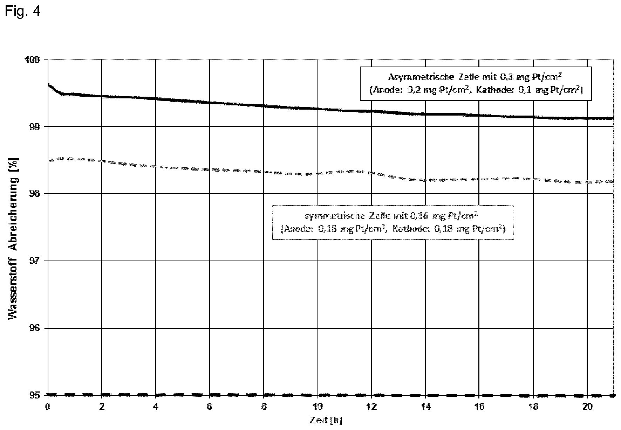

Während der Versuche wurden der Strom (I), die Spannung (V), die Zeit (t), die Zellentemperatur (T), der Überdruck (p_{An}, p_{Kath}) an der Anode 7 und an der Kathode 11 und die Gaszusammensetzung am Ausgang der Anode 7 durch Gaschromatographie bestimmt. Ausgehend von den auf diese Weise ermittelten Daten kann die Wasserstoff-Abtrennrate auf zwei verschiedene Arten erfolgen. Einerseits entspricht der gemessene Strom nach dem Faraday'schen Gesetz den durch die Membran 3 transportierten Protonen. Das Verhältnis des durch die Membran 3 transportierten Wasserstoffs zu der bekannten Wasserstoffmenge an der Anode 7 führt zu dem Wert der Strom-basierten Wasserstoff-Abtrennung. Andererseits kann der bekannte Wasserstoffgehalt an der Anode 7 mit dem auf der Seite der Kathode 11 gemessenen Wasserstoffgehalt als Gaschromatographie-basierte Wasserstoff-Abtrennung bestimmt werden. Die strombasierten und gaschromatographiebasierten Abtrennraten zeigen keine signifikanten Abweichungen, weshalb in den Figuren 2 und 4 nur die Gaschromatografie basierten Abtrennraten gezeigt werden.

### Beispiel 1 (erfindungsgemäß)

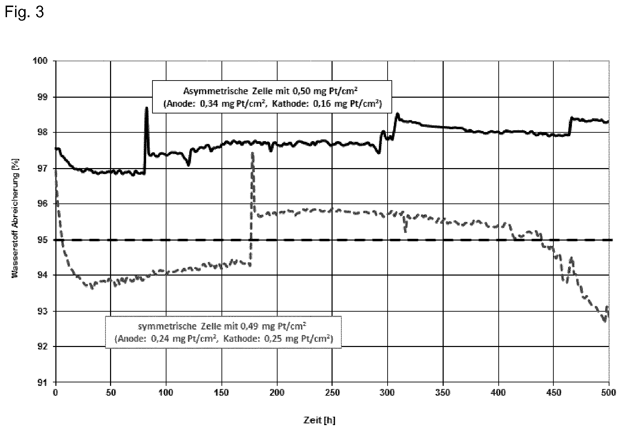

Die Gesamt-Platinbeladung betrug 0,50 mg/cm², wobei sich auf der Anodenseite 0,34 mg/cm² Pt befanden und auf der Kathodenseite nur 0,16 mg/cm² (asymmetrischer Aufbau). Der verwendete Katalysator war mit ca. 30 % Pt beladen. Im Vergleich zu einer symmetrischen Zelle mit je 1 mg/cm² Pt (Stand der Technik), ist die Pt-Menge um 75 % reduziert. Mit dieser Zelle konnten 97 % bis 98 % des Wasserstoffs aus dem Gasgemisch unter den in "Allgemeine Testbedingungen" beschriebenen experimentellen Bedingungen abgetrennt werden. Figur 3 zeigt die Wasserstoffabtrennraten aus Beispiel 1 und Vergleichsbeispiel 1.

### Beispiel 2 (erfindungsgemäß)

Die Gesamt-Platinbeladung betrug 1,26 mg/cm², wobei sich auf der Anodenseite 0,79 mg/cm² Pt befanden und auf der Kathodenseite nur 0,47 mg/cm² (asymmetrischer Aufbau). Der verwendete Katalysator war mit ca. 15% Pt beladen. Im Vergleich zu einer symmetrischen Zelle mit je 1 mg/cm² Pt (Stand der Technik), ist die Pt-Menge um 37 % reduziert. Mit dieser Zelle konnten mehr als 99 % des Wasserstoffs aus dem Gasgemisch unter den in "Allgemeine Testbedingungen" beschriebenen experimentellen Bedingungen abgetrennt werden.

### Beispiel 3 (erfindungsgemäß)

Die Gesamt-Platinbeladung betrug 0,30 mg/cm², wobei sich auf der Anodenseite 0,20 mg/cm² Pt befanden und auf der Kathodenseite nur 0,10 mg/cm² (asymmetrischer Aufbau). Der verwendete Katalysator war mit ca. 10% Pt beladen. Im Vergleich zu einer symmetrischen Zelle mit je 1 mg/cm² Pt (Stand der Technik), ist die Pt-Menge um 85 % reduziert. Mit dieser Zelle konnten mehr als 99 % des Wasserstoffes aus dem Gasgemisch unter den in "Allgemeine Testbedingungen" beschriebenen experimentellen Bedingungen abgetrennt werden.

### Vergleichsbeispiel 1 (nicht erfindungsgemäß)

Die Gesamt-Platinbeladung betrug 0,49 mg/cm²; diese Beladung ist nahezu identisch zu der in Beispiel 1. Wie in Beispiel 1 wurde ein mit ca. 30 % beladener Pt Katalysator verwendet. Im Gegensatz zu Beispiel 1 wurde im Vergleichsbeispiel eine symmetrische Zelle getestet mit 0,24 mg/cm² Pt auf der Anode und 0,25 mg/cm² Pt auf der Kathode (symmetrischer Aufbau). Mit dieser Zelle konnten 93 % bis 96 % des Wasserstoffs aus dem Gasgemisch unter den in "Allgemeine Testbedingungen" beschriebenen experimentellen Bedingungen abgetrennt werden, d.h. deutlich weniger als im Beispiel 1 (97 % bis 98 %). Figur 3 zeigt die Wasserstoffabtrennraten aus Beispiel 1 und Vergleichsbeispiel 1.

### Vergleichsbeispiel 2 (nicht erfindungsgemäß)

Die Gesamt-Platinbeladung betrug 1,26 mg/cm²; diese Beladung ist identisch zu der in Beispiel 2. Wie in Beispiel 2 wurde ein mit ca. 15 % beladener Pt Katalysator verwendet. Im Gegensatz zu Beispiel 2 wurde im Vergleichsbeispiel eine symmetrische Zelle getestet mit 0,64 mg/cm² Pt auf der Anode und 0,62 mg/cm² Pt auf der Kathode (symmetrischer Aufbau). Mit dieser Zelle konnten weniger als 96 % des Wasserstoffs aus dem Gasgemisch unter den in "Allgemeine Testbedingungen" beschriebenen experimentellen Bedingungen abgetrennt werden, d.h. deutlich weniger als im Beispiel 2 (> 99 %).

### Vergleichsbeispiel 3 (nicht erfindungsgemäß)

Die Gesamt-Platinbeladung betrug 0,36 mg/cm²; diese Beladung ist höher als in Beispiel 3 (+ 0,06 mg/cm² Pt). Wie in Beispiel 3 wurde ein auf Kohlenstoff geträgerter Pt-Partikel Katalysator verwendet mit einer Beladung von 10 % Pt. Im Gegensatz zu Beispiel 3 wurde im Vergleichsbeispiel eine symmetrische Zelle getestet mit 0,18 mg/cm² Pt auf der Anode und 0,18 mg/cm² Pt auf der Kathode (symmetrischer Aufbau). Mit dieser Zelle konnten weniger als 98,5 % des Wasserstoffs aus dem Gasgemisch unter den in "Allgemeine Testbedingungen" beschriebenen experimentellen Bedingungen abgetrennt werden, d.h. deutlich weniger als im Beispiel 3 (> 99 %) im asymmetrischen Aufbau mit weniger Platin.

Die nachstehende Tabelle 1 zeigt Beispiele 1 bis 3 und Vergleichsbeispiele 1 bis 3 zum Einfluss der Menge an katalytisch aktivem Material auf der Seite der Anode 7 und auf der Seite der Kathode 11. Bei identischer Pt-Menge lassen sich mit asymmetrischen Zellen höhere Wasserstoff-Abtrennraten erzielen als mit symmetrischen. Tabelle 1 zeigt andererseits, dass eine deutliche Kostenverringerung erreicht werden kann, wenn auf der Seite der Kathode 11 eine geringere Menge an katalytisch aktivem Material vorhanden ist als auf der Seite der Anode 7. Wie Tabelle 1 zu entnehmen ist, können Verringerungen des Platingehalts von bis zu 85 % realisiert werden, während die Wasserstoff-Abtrennrate weiterhin über 95 % liegt.

**Tabelle 1**

| **Beispiele / Vergleichsbeispiele und Zelldesign** | **Pt-Katalysator in Gesamtzelle [mg/cm²]** | **H₂ Abtrennung [%]** | **Pt in Anode [mg/cm²]** | **Pt in Kathode [mg/cm²]** | **Pt Beladung auf Kohlenstoffträger[%]** | **Pt Reduktion* [%]** |
|---|---|---|---|---|---|---|
| Beispiel 1 (asym.) | 0,50 | 97-98 | 0,34 | 0,16 | ≈ 30 | 75,0 |
| Vergleichsbeispiel 1 (sym.) | 0,49 | 93-96 | 0,24 | 0,25 | ≈ 30 | 75,5 |
| Beispiel 2 (asym.) | 1,26 | >99 | 0,79 | 0,47 | ≈ 15 | 37,0 |
| Vergleichsbeispiel 2 (sym.) | 1,26 | <96 | 0,64 | 0,62 | ≈ 15 | 37,0 |
| Beispiel 3 (asym.) | 0,3 | >99 | 0,20 | 0,10 | ≈ 10 | 85 |
| Vergleichsbeispiel 3 (sym.) | 0,36 | <98.5 | 0,18 | 0,18 | ≈ 10 | 82 |

| | | | | | | |
|---|---|---|---|---|---|---|
| * im Vergleich zu symmetrischer Zelle mit 2 mg/cm² Pt (je 1 mg/cm² Pt auf jeder Seite); | | | | | | |

### Auswertung

Figur 3 zeigt ein Diagramm zur Wasserstoff-Abtrennung der Membran-Elektroden-Anordnung 1 nach Beispiel 1 (durchgehende Linie) und Vergleichsbeispiel 1 (gestrichelte Linie) über 500 Betriebsstunden. Die asymmetrische Membran-Elektroden-Anordnung 1 nach Beispiel 1 zeigte eine gute Leistungsfähigkeit über 500 Betriebsstunden mit einer Wasserstoff-Abtrennrate von größer als 97 % bis 98 %. Ebenfalls ist der Verlauf der Wasserstoff-Abtrennrate für die symmetrische Membran-Elektroden-Anordnung 1 nach Vergleichsbeispiel 3 unter identischen experimentellen Bedingungen, mit gleichem Katalysator (ca. 30 % Pt-Beladung) und vergleichbarer Pt-Gesamtmenge (ca. 0,5 mg/cm² Pt) über 500 Betriebsstunden gezeigt. Die Wasserstoff-Abtrennrate ist hier mit 93 % bis 96 % deutlich geringer.

Beispiel 1 zeigt, dass Spuren anderer Kohlenwasserstoffe (z.B. Ethan, Benzen) die Membran 3 nicht beschädigten oder die Elektroden 7, 11 deaktivierten.

Figur 4 zeigt ein Diagramm zur Wasserstoff-Abtrennung der Membran-Elektroden-Anordnung 1 nach Beispiel 3 (durchgehende Linie) und Vergleichsbeispiel 3 (gestrichelte Linie) über 20 Betriebsstunden. Die asymmetrische Membran-Elektroden-Anordnung 1 nach Beispiel 3 zeigte eine gute Leistungsfähigkeit mit einer Wasserstoff-Abtrennrate von größer als 99 %. Ebenfalls ist der Verlauf der Wasserstoff-Abtrennrate für die symmetrische Membran-Elektroden-Anordnung 1 nach Vergleichsbeispiel 3 unter identischen experimentellen Bedingungen gezeigt. Die Wasserstoff-Abtrennrate ist hier mit ca. 98 % deutlich geringer.

Wie den Ergebnissen weiter entnommen werden kann, zeigte sich keine Degradation des Platinkatalysators 15, 17 im asymmetrischen Aufbau über 500 Betriebsstunden, wohingegen im symmetrischen Aufbau ein deutlicher Abbau der Wasserstoff-Abtrennrate gegen Ende zu beobachten war; insbesondere fiel die Abtrennrate unter die gewünschten 95%.

### Zweite Ausführungsform

Eine zweites Anwendungsbeispiel für den Einsatz der erfindungsgemäßen Membran-Elektroden-Anordnung 1 ist die Abtrennung von H₂ aus einem Gasgemisch, das CO₂, H₂ sowie Spuren von Verunreinigungen (CH₄, C₂H₄, C₂H₆, C₆H₆,) enthält.

### Aufbau der Membran-Elektroden-Anordnung 1

Der Aufbau der Membran-Elektroden-Anordnung 1 ist identisch zu dem vorstehend in der ersten Ausführungsform beschriebenen Aufbau (Beispiele 1 bis 3). Die Menge des Platins auf den Gasdiffusionselektroden 7, 11 ist der nachstehenden Tabelle 2 zu entnehmen.

### Allgemeine Testbedingungen (Beispiel 4)

Die Testgasmischung (d.h. der Anode 7 zugeführtes Gas) enthielt 5 % H₂ in CO₂, sowie folgende Spuren von Verunreinigungen: 881 ppm CH₄, 5 ppm C₂H₄, 0,05 ppm C₂H₆ und 0,1 ppm C₆H₆. Während des Versuchs wurde die Kathode 11 mit N₂ gespült. Die typische Flussrate sowohl für den Anodengasstrom als auch den Kathodengasstrom war 500 ml pro Minute. Als Potentialdifferenz wurden 150 mV angelegt. Die Membran-Elektroden-Anordnungen 1 wurden befeuchtet (1 g/h Wasser auf der Anodenseite). Die Testtemperatur war 160 °C. Für die spezielle Membran-Elektroden-Anordnung 1 wurde ein Überdruck von 3 bar für die Anodenseite und die Kathodenseite eingestellt.

### Messdaten und Analyse

Messdaten und Analyse sind identisch zu den vorstehend in der ersten Ausführungsform genannten Messdaten und Analyse (Beispiele 1 bis 3).

### Beispiel 4 (erfindungsgemäß)

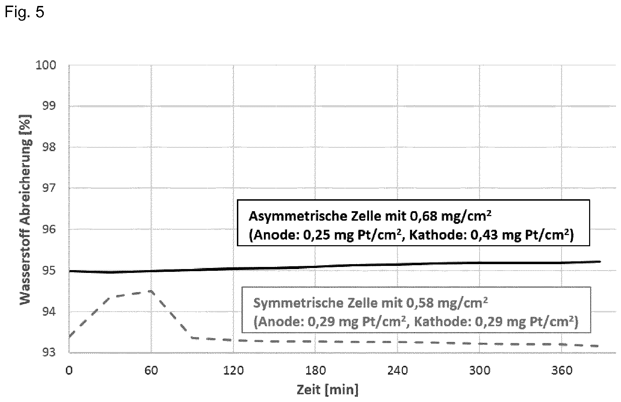

Die Gesamt-Platinbeladung betrug 0,68 mg/cm², wobei sich auf der Anodenseite 0,43 mg/cm² Pt befanden und auf der Kathodenseite nur 0,25 mg/cm² (asymmetrischer Aufbau). Der verwendete Katalysator war mit ca. 16 % Pt beladen. Im Vergleich zu einer symmetrischen Zelle mit je 1 mg/cm² Pt (Stand der Technik), ist die Pt-Menge um 66 % reduziert. Mit dieser Zelle konnten ca. 95 % des Wasserstoffs aus dem Gasgemisch unter den in "Allgemeine Testbedingungen (Beispiel 4)" beschriebenen experimentellen Bedingungen abgetrennt werden. Figur 5 zeigt die Wasserstoffabtrennraten aus Beispiel 4 und Vergleichsbeispiel 4.

### Vergleichsbeispiel 4 (nicht erfindungsgemäß)

Die Gesamt-Platinbeladung betrug 0,58 mg/cm²; diese Beladung ist vergleichbar mit der in Beispiel 4. Wie in Beispiel 4 wurde ein mit ca. 16% beladener Pt Katalysator verwendet. Im Gegensatz zu Beispiel 4 wurde im Vergleichsbeispiel eine symmetrische Zelle getestet mit 0,29 mg/cm² Pt auf der Anode und 0,29 mg/cm² Pt auf der Kathode (symmetrischer Aufbau). Mit dieser Zelle konnten ca. 93 % des Wasserstoffs aus dem Gasgemisch unter den in "Allgemeine Testbedingungen (Beispiel 4)" beschriebenen experimentellen Bedingungen abgetrennt werden, d.h. deutlich weniger als im Beispiel 4 (95 %). Figur 5 zeigt die Wasserstoffabtrennraten aus Beispiel 4 und Vergleichsbeispiel 4.

Die nachstehende Tabelle 2 zeigt Beispiel 4 und Vergleichsbeispiel 4 zum Einfluss der Menge an katalytisch aktivem Material auf der Seite der Anode 7 und auf der Seite der Kathode 11. Bei vergleichbarer Pt-Menge lässt sich mit der asymmetrischen Zelle eine höhere Wasserstoff-Abtrennrate erzielen als mit symmetrischen. Tabelle 2 zeigt andererseits, dass eine deutliche Kostenverringerung erreicht werden kann, wenn auf der Seite der Kathode 11 eine geringere Menge an katalytisch aktivem Material vorhanden ist als auf der Seite der Anode 7.

**Tabelle 2**

| **Beispiel / Vergleichsbeispiel und Zelldesign** | **Pt-Katalysator in Gesamtzelle [mg/cm²]** | **H₂ Abtrennung [%]** | **Pt in Anode [mg/cm²]** | **Pt in Kathode [mg/cm²]** | **Pt Beladung auf Kohlenstoffträger [%]** | **Pt Reduktion* [%]** |
|---|---|---|---|---|---|---|
| Beispiel 4 (asym.) | 0,68 | ≈ 95 | 0,43 | 0,25 | ≈ 16 | 66,0 |
| Vergleichsbeispiel 4 (sym.) | 0,58 | ≈ 93 | 0,29 | 0,29 | ≈ 16 | 71,0 |

| | | | | | | |
|---|---|---|---|---|---|---|
| * im Vergleich zu symmetrischer Zelle mit 2 mg/cm² Pt (je 1 mg/cm² Pt auf jeder Seite) | | | | | | |

### Auswertung

Figur 5 zeigt ein Diagramm zur Wasserstoff-Abtrennung der Membran-Elektroden-Anordnung 1 nach Beispiel 4 (durchgehende Linie) und Vergleichsbeispiel 4 (gestrichelte Linie) in einem Kurzzeittest über ca. 6 Betriebsstunden.

Die asymmetrische Membran-Elektroden-Anordnung 1 nach Beispiel 4 zeigte eine deutlich höhere Wasserstoff-Abtrennrate (= 95 %) als die symmetrische Membran-Elektroden-Anordnung 1 nach Vergleichsbeispiel 4 (= 93 %) unter identischen experimentellen Bedingungen, mit gleichem Katalysator (ca. 16 % Pt-Beladung) und vergleichbarer Pt-Gesamtmenge.

Zusammen mit den Beispielen 1 bis 3 zeigt Beispiel 4, dass mit der asymmetrischen Membran-Elektroden-Anordnung 1 in unterschiedlichen Gasgemischen, die H₂ und Verunreinigungen enthalten, bessere Wasserstoff-Abtrennraten erzielt werden können als mit einer symmetrischen Membran-Elektroden-Anordnung mit vergleichbarer bzw. identischer Pt-Gesamtmenge. Außerdem zeigen die Beispiele, dass eine asymmetrische Membran-Elektroden-Anordnung 1 unabhängig von der Seite der Befeuchtung (Kathodenseite 11 in Beispielen 1 bis 3, Anodenseite 7 in Beispiel 4) im Vergleich zu einer symmetrischen Membran-Elektroden-Anordnung mit vergleichbarer bzw. identischer Pt-Gesamtmenge in Bezug auf die H₂-Abtrennrate bevorzugt ist.

## Patentansprüche

1. Anordnung enthaltend eine Spannungsquelle (13) und eine Membran-Elektroden-Anordnung (1), wobei die Membran-Elektroden-Anordnung (1) Folgendes umfasst
- eine gasdichte, selektiv protonenleitende Membran (3), die eine Retentat-Seite (5) mit einer Anode (7) und eine Permeat-Seite (9) mit einer Kathode (11) aufweist, wobei
die Anode (7) eine Gasdiffusionselektrode ist, die eine an die Membran (3) angrenzende Gasdiffusionsschicht (19) und eine darauf aufgebrachte mikroporöse Schicht (21) aufweist, auf die der Anoden-Katalysator (15) aufgebracht ist, und/oder
die Kathode (11) eine Gasdiffusionselektrode ist, die eine an die Membran (3) angrenzende Gasdiffusionsschicht (23) und eine darauf aufgebrachte mikroporöse Schicht (25) aufweist, auf die der Kathoden-Katalysator (17) aufgebracht ist, wobei zwischen der Anode (7) und der Kathode (11) eine Potentialdifferenz mit der Spannungsquelle (13) erzeugt wird,
- einen Anoden-Katalysator (15), der ein katalytisch aktives Material aufweist, auf der Retentat-Seite (5) und
- einen Kathoden-Katalysator (17), der ein katalytisch aktives Material aufweist, auf der Permeat-Seite (9),
wobei die Menge des katalytisch aktiven Materials des Kathoden-Katalysators (17) im Verhältnis von 1 : 100 bis 1 : 1,25, insbesondere im Verhältnis von 1:1,5-5,0, bevorzugt 1:1,75-3,0, zur Menge des katalytisch aktiven Materials des Anoden-Katalysators (15) steht.

2. Anordnung nach Anspruch 1, wobei die Menge des katalytisch aktiven Materials des Kathoden-Katalysators (17) 0,001 mg/cm² bis 1,00 mg/cm², bevorzugt 0,05 mg/cm² bis 0,7 mg/cm², beträgt, bezogen auf die Gesamtfläche der Kathode (11).

3. Anordnung nach einem der Ansprüche 1 oder 2, wobei der Anoden-Katalysator (15) und/oder der Kathoden-Katalysator (17) Platin als katalytisch aktives Material aufweist.

4. Anordnung nach einem der Ansprüche 1 bis 3 wobei der Anoden-Katalysator (15) und der Kathoden-Katalysator (17) das gleiche katalytisch aktive Material aufweisen.

5. Anordnung nach einem der Ansprüche 1 bis 4, wobei die Retentat-Seite (5) und/oder die Permeat-Seite (9) je eine aktive Fläche der Membran-Elektroden-Anordnung (1) aufweisen, die das katalytisch aktive Material umfasst, wobei die aktive Fläche 5 cm² bis 20.000 cm², bevorzugt 25 cm² bis 10.000 cm², beträgt.

6. Anordnung nach einem der Ansprüche 1 bis 5, wobei die Gasdiffusionsschichten (19, 23) ein elektronisch leitfähiges und offenporiges Material umfassen.

7. Anordnung nach einem der Ansprüche 1 bis 6, wobei die Gasdiffusionsschichten (19, 23) und/oder die mikroporösen Schichten (21, 25) Kohlenstoff aufweisen.

8. Reaktor, umfassend
- zumindest eine Vorrichtung zur Durchführung einer chemischen Reaktion, bei der ein gemischtes Produktgases entsteht, das Wasserstoff enthält, und
- zumindest eine Anordnung nach einem der Ansprüche 1 bis 7,
wobei die Membran-Elektroden-Anordnung (1) so mit der Vorrichtung verbunden ist, dass zumindest ein Teil des gemischten Produktgases aus der Vorrichtung auf die Retentat-Seite (5) der Membran-Elektroden-Anordnung (1) leitbar ist.

9. Verfahren zur Abtrennung von Wasserstoff umfassend die Schritte
a) Durchführen einer chemischen Reaktion, bei der ein gemischtes Produktgas entsteht, das Wasserstoff enthält, in einem Reaktor nach Anspruch 8,
b) Zuführen des gemischten Produktgases zur Retentat-Seite (5) einer Membran-Elektroden-Anordnung (1) in einer Anordnung nach einem der Ansprüche 1 bis 7 und
c) elektrochemisches Abtrennen zumindest eines Teils des in dem gemischten Produktgas enthaltenen Wasserstoffs mittels der Membran-Elektroden-Anordnung (1) in einer Anordnung nach einem der Ansprüche 1 bis 7,
wobei auf der Retentat-Seite (5) der Membran (3) zumindest ein Teil des Wasserstoffs an dem Anoden-Katalysator (15) zu Protonen oxidiert wird und die Protonen nach Durchqueren der Membran (3) auf der Permeat-Seite (9) an dem Kathoden-Katalysator (17) zu Wasserstoff reduziert werden.

10. Verfahren nach Anspruch 9, wobei die chemische Reaktion in Schritt a) eine Dehydroaromatisierung von C₁- bis C₄-Alkanen ist.

11. Verfahren nach einem der Ansprüche 9 oder 10, wobei aus dem gemischten Produktgas mindestens 30 %, bevorzugt mindestens 50 %, besonders bevorzugt mindestens 70 %, ganz besonders bevorzugt mindestens 95 % und insbesondere bevorzugt mindestens 98 % des im gemischten Produktgas enthaltenen Wasserstoffs abgetrennt werden.

12. Verfahren nach einem der Ansprüche 9 bis 11, wobei die Abtrennung des Wasserstoffs bei Temperaturen von 20 °C bis 200°C, bevorzugt bei 50°C bis 180 °C, und insbesondere bevorzugt von 60°C bis 165 °C durchgeführt wird.

## Claims

1. An arrangement comprising a voltage source (13) and a membrane-electrode assembly (1), wherein the membrane-electrode assembly (1) comprises the following
- a gastight, selectively proton-conducting membrane (3) which has a retentate side (5) having an anode (7) and a permeate side (9) having a cathode (11), wherein
the anode (7) is a gas diffusion electrode which has a gas diffusion layer (19) adjoining the membrane (3) and a microporous layer (21) applied thereto, on top of which the anode catalyst (15) has been applied, and/or
the cathode (11) is a gas diffusion electrode which has a gas diffusion layer (23) adjoining the membrane (3) and a microporous layer (25) applied thereto, on top of which the cathode catalyst (17) has been applied, wherein a potential difference is generated by means of the voltage source (13) between the anode (7) and the cathode (11),
- an anode catalyst (15) having a catalytically active material on the retentate side (5) and
- a cathode catalyst (17) having a catalytically active material on the permeate side (9),
wherein the ratio of the amount of the catalytically active material of the cathode catalyst (17) to the amount of the catalytically active material of the anode catalyst (15) is from 1 : 100 to 1 : 1.25, in particular 1 : 1.5 - 5.0, preferably 1 : 1.75 - 3.0.

2. The arrangement according to claim 1, wherein the amount of the catalytically active material of the cathode catalyst (17) is from 0.001 mg/cm² to 1.00 mg/cm², preferably from 0.05 mg/cm² to 0.7 mg/cm², based on the total area of the cathode (11).

3. The arrangement according to either of claims 1 and 2, wherein the anode catalyst (15) and/or the cathode catalyst (17) has platinum as catalytically active material.

4. The arrangement according to any of claims 1 to 3, wherein the anode catalyst (15) and the cathode catalyst (17) have the same catalytically active material.

5. The arrangement according to any of claims 1 to 4, wherein the retentate side (5) and/or the permeate side (9) each have an active area of the membrane-electrode assembly (1) which comprises the catalytically active material, where the active area is from 5 cm² to 20 000 cm², preferably from 25 cm² to 10 000 cm².

6. The arrangement according to any of claims 1 to 5, wherein the gas diffusion layers (19, 23) comprise an electronically conductive and open-pored material.

7. The arrangement according to any of claims 1 to 6, wherein the gas diffusion layers (19, 23) and/or the microporous layers (21, 25) comprise carbon.

8. A reactor comprising
- at least one apparatus for carrying out a chemical reaction in which a mixed product gas comprising hydrogen is formed, and
- at least one arrangement according to any of claims 1 to 7,
wherein the membrane-electrode assembly (1) is joined to the apparatus in such a way that at least part of the mixed product gas can be conveyed from the apparatus onto the retentate side (5) of the membrane-electrode assembly (1).

9. A process for separating off hydrogen, which comprises the steps
a) carrying out a chemical reaction in which a mixed product gas comprising hydrogen is formed in a reactor according to claim 8,
b) feeding of the mixed product gas to the retentate side (5) of a membrane-electrode assembly (1) in an arrangement according to any of claims 1 to 7 and
c) electrochemical removal of at least part of the hydrogen comprised in the mixed product gas by means of the membrane-electrode assembly (1) in an arrangement according to any of claims 1 to 7,
wherein at least part of the hydrogen is oxidized to protons over the anode catalyst (15) on the retentate side (5) of the membrane (3) and the protons are, after traversing the membrane (3), reduced to hydrogen over the cathode catalyst (17) on the permeate side (9).

10. The process according to claim 9, wherein the chemical reaction in step a) is a dehydroaromatization of C₁-C₄-alkanes.

11. The process according to either of claims 9 and 10, wherein at least 30%, preferably at least 50%, particularly preferably at least 70%, very particularly preferably at least 95% and in particular preferably at least 98%, of the hydrogen comprised in the mixed product gas is separated off from the mixed product gas.

12. The process according to any of claims 9 to 11, wherein the removal of the hydrogen is carried out at temperatures of from 20°C to 200°C, preferably from 50°C to 180°C, in particular preferably from 60°C to 165°C.

## Revendications

1. Agencement contenant une source de tension (13) et un agencement membrane-électrodes (1), l'agencement membrane-électrodes (1) comprenant :
- une membrane étanche aux gaz, sélectivement conductrice de protons (3), qui comprend un côté du rétentat (5) muni d'une anode (7) et un côté du perméat (9) muni d'une cathode (11),
l'anode (7) étant une électrode à diffusion de gaz, qui comprend une couche de diffusion de gaz (19) adjacente à la membrane (3) et une couche microporeuse (21) appliquée sur celle-ci, sur laquelle le catalyseur d'anode (15) est appliqué, et/ou
la cathode (11) étant une électrode à diffusion de gaz, qui comprend une couche de diffusion de gaz (23) adjacente à la membrane (3) et une couche microporeuse (25) appliquée sur celle-ci, sur laquelle le catalyseur de cathode (17) est appliqué, une différence de potentiel étant générée avec la source de tension (13) entre l'anode (7) et la cathode (11),
- un catalyseur d'anode (15), qui comprend un matériau catalytiquement actif, sur le côté du rétentat (5), et
- un catalyseur de cathode (17), qui comprend un matériau catalytiquement actif, sur le côté du perméat (9),
la quantité du matériau catalytiquement actif du catalyseur de cathode (17) présentant un rapport de 1:100 à 1:1,25, notamment un rapport de 1:1,5 à 5,0, de préférence de 1:1,75 à 3,0, par rapport à la quantité du matériau catalytiquement actif du catalyseur d'anode (15).

2. Agencement selon la revendication 1, dans lequel la quantité du matériau catalytiquement actif du catalyseur de cathode (17) est de 0,001 mg/cm² à 1,00 mg/cm², de préférence de 0,05 mg/cm² à 0,7 mg/cm², par rapport à la surface totale de la cathode (11).

3. Agencement selon l'une quelconque des revendications 1 ou 2, dans lequel le catalyseur d'anode (15) et/ou le catalyseur de cathode (17) comprennent du platine en tant que matériau catalytiquement actif.

4. Agencement selon l'une quelconque des revendications 1 à 3, dans lequel le catalyseur d'anode (15) et le catalyseur de cathode (17) comprennent le même matériau catalytiquement actif.

5. Agencement selon l'une quelconque des revendications 1 à 4, dans lequel le côté du rétentat (5) et/ou le côté du perméat (9) comprennent chacun une surface active de l'agencement membrane-électrodes (1), qui comprend le matériau catalytiquement actif, la surface active étant de 5 cm² à 20 000 cm², de préférence de 25 cm² à 10 000 cm².

6. Agencement selon l'une quelconque des revendications 1 à 5, dans lequel les couches de diffusion de gaz (19, 23) comprennent un matériau électroniquement conducteur et à pores ouverts.

7. Agencement selon l'une quelconque des revendications 1 à 6, dans lequel les couches de diffusion de gaz (19, 23) et/ou les couches microporeuses (21, 25) comprennent du carbone.

8. Réacteur, comprenant :
- au moins un dispositif pour la réalisation d'une réaction chimique lors de laquelle un produit gazeux mélangé se forme, qui contient de l'hydrogène, et
- au moins un agencement selon l'une quelconque des revendications 1 à 7,
l'agencement membrane-électrodes (1) étant raccordé avec le dispositif de telle sorte qu'au moins une partie du produit gazeux mélangé issu du dispositif puisse être acheminée sur le côté du rétentat (5) de l'agencement membrane-électrodes (1).

9. Procédé de séparation d'hydrogène, comprenant les étapes suivantes :
a) la réalisation d'une réaction chimique lors de laquelle un produit gazeux mélangé se forme, qui contient de l'hydrogène, dans un réacteur selon la revendication 8,
b) l'introduction du produit gazeux mélangé du côté du rétentat (5) d'un agencement membrane-électrodes (1) dans un agencement selon l'une quelconque des revendications 1 à 7, et
c) la séparation électrochimique d'au moins une partie de l'hydrogène contenu dans le produit gazeux mélangé au moyen de l'agencement membrane-électrodes (1) dans un agencement selon l'une quelconque des revendications 1 à 7,
au moins une partie de l'hydrogène étant oxydée en protons sur le catalyseur d'anode (15) du côté du rétentat (5) de la membrane (3), et les protons étant réduits en hydrogène sur le catalyseur de cathode (17) du côté du perméat (9) après la traversée de la membrane (3).

10. Procédé selon la revendication 9, dans lequel la réaction chimique à l'étape a) est une déshydroaromatisation d'alcanes en C₁ à C₄.

11. Procédé selon l'une quelconque des revendications 9 ou 10, dans lequel au moins 30 %, de préférence au moins 50 %, de manière particulièrement préférée au moins 70 %, de manière tout particulièrement préférée au moins 95 % et de manière notamment préférée au moins 98 % de l'hydrogène contenu dans le produit gazeux mélangé est séparé du produit gazeux mélangé.

12. Procédé selon l'une quelconque des revendications 9 à 11, dans lequel la séparation de l'hydrogène est réalisée à des températures de 20 °C à 200 °C, de préférence de 50 °C à 180 °C, et de manière notamment préférée de 60 °C à 165 °C.
